# EUROPEAN PATENT APPLICATION

(11) **EP 3 435 510 A1**
(43) Date of publication of application: **30.01.2019**
(21) Application number: 17769876.8
(22) Date of filing: 06.03.2017
(51) Int. Cl.: H02J 3/26, H02H 7/06, H02J 3/32, H02J 3/38, H02M 7/48, H02P 9/42

(54) **POWER SUPPLY SYSTEM AND CONTROL METHOD**

(30) Priority: 24.03.2016 JP 2016060960
(71) Applicant: Panasonic Intellectual Property Management Co., Ltd., Osaka-shi, Osaka 540-6207 (JP)
(72) Inventor: YOSHIZAWA Jin, Osaka-shi, Osaka 540-6207 (JP); WATANABE Kenichi, Osaka-shi, Osaka 540-6207 (JP); ISE Toshifumi, Osaka 565-0871 (JP); LIU Jia, Osaka 565-0871 (JP)
(74) Representative: Appelt, Christian W.
(86) International application number: PCT/JP2017/008656
(87) International publication number: WO 2017/163831

(57) **Abstract**

A power supply system (1) includes: a synchronous generator (11) connected to a three-phase power distribution system (40) that is connected to a consumer load (30); an inverter (21) that is connected to the power distribution system (40), supplies power to the consumer load (30), and compensates for unbalanced current of the synchronous generator (11); and a control device (100) that generates a gate command for controlling the inverter (21). The control device (100): generates, based on a three-phase voltage and current output from the inverter (21), a target output voltage which is an amplitude of a vector in a complex plane combining voltages of three phases, and a target output phase which is a phase of the vector in the complex plane combining the voltages of three phases; generates a first compensation voltage, based on a current negative-phase-sequence component relating to the synchronous generator (11); and generates a gate command from the generated values.

## Description

### TECHNICAL FIELD

The present invention relates to a power supply system, and a control method used in the power supply system.

### BACKGROUND ART

Conventionally, in power distribution to a consumer (power use facility) by a power system including a synchronous generator, unbalanced current occurs in the case where a single-phase load and a three-phase load coexist as consumer loads. Unbalanced current decreases the output efficiency of the synchronous generator and, as negative-phase-sequence current of the synchronous generator, causes damage to the synchronous generator due to heating and the like. In view of the problem of unbalanced current, for example, a device that provides a power storage battery and a power conditioner in a consumer and compensates, by the power conditioner, for an unbalance of line current of low-voltage power distribution lines and the like has been proposed (see PTL 1). Moreover, a dispersed power source linked with an inverter, such as a solar power generation device, has been widely used in recent years.

### Citation List

### Patent Literature

PTL 1: Japanese Unexamined Patent Application Publication No. 2001-231169

### SUMMARY OF THE INVENTION

### TECHNICAL PROBLEM

The present invention has an object of providing a power supply system in which an inverter linked with a dispersed power source is connected to a power generation device such as a synchronous generator, and the inverter is controlled to supply power to a consumer and compensate for negative-phase-sequence current of the power generation device. The present invention also has an object of providing a control method used to control the inverter in the power supply system.

### SOLUTION TO PROBLEM

To achieve the stated object, a power supply system according to an aspect of the present invention includes: a power distribution system that is connected to a consumer load, the power distribution system being a three-phase power distribution system; a power generation device that is connected to the power distribution system; an inverter that is connected to the power distribution system, supplies power to the consumer load, and compensates for an unbalanced current of the power generation device; an inverter output component calculator that calculates a voltage positive-phase-sequence component, a current positive-phase-sequence component, a voltage angular velocity, and a voltage value relating to the inverter, based on a three-phase voltage and a three-phase current output from the inverter to the power distribution system; a power generation device output component calculator that calculates a current negative-phase-sequence component and a voltage phase relating to the power generation device, based on a three-phase voltage and a three-phase current output from the power generation device to the power distribution system; an active and reactive power calculator that calculates an active power and a reactive power relating to the inverter, from the voltage positive-phase-sequence component and the current positive-phase-sequence component relating to the inverter; a target output voltage generator that generates a target output voltage which is an amplitude of a vector in a complex plane combining voltages of three phases, based on the voltage value and the reactive power relating to the inverter; a target output phase generator that generates a target output phase which is a phase of the vector in the complex plane combining the voltages of the three phases, based on the voltage angular velocity and the active power relating to the inverter; a negative-phase-sequence compensation voltage generator that generates a first compensation voltage, based on the current negative-phase-sequence component and the voltage phase relating to the power generation device; and a gate command value calculator that generates a gate command to the inverter, according to the first compensation voltage, the target output voltage, and the target output phase.

To achieve the stated object, a control method according to an aspect of the present invention is a control method in a power supply system that includes: a power distribution system that is connected to a consumer load, the power distribution system being a three-phase power distribution system; a power generation device that is connected to the power distribution system; and an inverter that is connected to the power distribution system, supplies power to the consumer load, and compensates for an unbalanced current of the power generation device, the control method including: calculating a voltage positive-phase-sequence component, a current positive-phase-senquence component, a voltage angular velocity, and a voltage value relating to the inverter, based on a three-phase voltage and a three-phase current output from the inverter to the power distribution system; calculating a current negative-phase-sequence component and a voltage phase relating to the power generation device, based on a three-phase voltage and a three-phase current output from the power generation device to the power distribution system; calculating an active power and a reactive power relating to the inverter, from the voltage positive-phase-senquence component and the current positive-phase-sequence component relating to the inverter; generating a target output voltage which is an amplitude of a vector in a complex plane combining voltages of three phases, based on the voltage value and the reactive power relating to the inverter; generating a target output phase which is a phase of the vector in the complex plane combining the voltages of the three phases, based on the voltage angular velocity and the active power relating to the inverter; generating a first compensation voltage, based on the current negative-phase-sequence component and the voltage phase relating to the power generation device; generating a gate command to the inverter, according to the first compensation voltage, the target output voltage, and the target output phase; and controlling the inverter by the gate command.

### ADVANTAGEOUS EFFECT OF INVENTION

According to the present invention, a power generation device such as a synchronous generator and an inverter can supply power to a consumer, and the inverter can compensate for negative-phase-sequence current of the power generation device.

### BRIEF DESCRIPTION OF DRAWINGS

FIG. 1 is a diagram illustrating the schematic structure of a power supply system according to Embodiment 1.
FIG. 2 is a block diagram illustrating an example of the structure of an inverter output component calculator according to Embodiment 1.
FIG. 3 is a block diagram illustrating an example of the structure of a power generation device output component calculator according to Embodiment 1.
FIG. 4 is a block diagram illustrating an example of the structure of a target output voltage generator according to Embodiment 1.
FIG. 5 is a block diagram illustrating an example of the structure of a target output phase generator according to Embodiment 1.
FIG. 6 is a block diagram illustrating an example of the structure of a negative-phase-sequence compensation voltage generator according to Embodiment 1.
FIG. 7 is a diagram illustrating the schematic structure of a power supply system according to Embodiment 2.

### DESCRIPTION OF EXEMPLARY EMBODIMENTS

### EMBODIMENT 1

Embodiments are described below, with reference to drawings. The embodiments described below each show a specific example of the present invention. The numerical values, shapes, materials, structural elements, the arrangement and connection of the structural elements, steps, the order of steps, etc. shown in the following embodiments are mere examples, and do not limit the scope of the present invention. Of the structural elements in the embodiments described below, the structural elements not recited in any one of the independent claims are structural elements that may be added optionally. Each drawing is a schematic, and does not necessarily provide precise depiction.

A power supply system according to an embodiment of the present invention is described below.

### (Overall structure of power supply system 1)

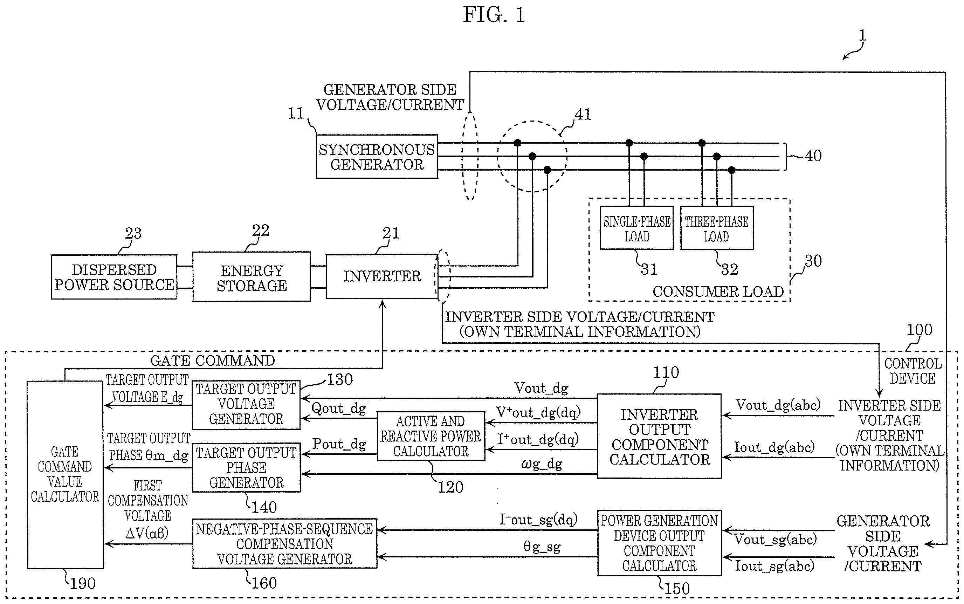

FIG. 1 is a diagram illustrating the schematic structure of power supply system 1 according to this embodiment.

Power supply system 1 is a system for supplying power to a consumer (power use facility) by synchronous generator 11 and inverter 21 that is linked with dispersed power source 23. Power supply system 1 includes synchronous generator 11, inverter 21, energy storage 22, dispersed power source 23, control device 100, and power distribution system 40, as illustrated in FIG. 1.

Power distribution system 40 includes power distribution lines forming a three-phase transmission path. Power distribution system 40 is connected to synchronous generator 11 and inverter 21 at junction 41, and transmits power to the consumer. Power distribution system 40 is connected to consumer load 30 (e.g. power use appliance) in the consumer. Consumer load 30 includes three-phase load 32 connected to each of the power distribution lines of three phases, and single-phase load 31 connected to part of the power distribution lines of three phases,, as illustrated in FIG. 1.

Synchronous generator 11 is a power generation device that generates AC power synchronous with the rotational speed of a magnetic field, such as a diesel generator or a gas engine generator. Synchronous generator 11 is connected to power distribution system 40 that transmits generated power.

Dispersed power source (dispersion type power source) 23 is a power source that generates power by any of various power generation methods such as solar power generation, wind power generation, and fuel cell.

Energy storage 22 is a medium that stores power (energy) generated by dispersed power source 23, such as a storage battery. Energy storage 22 is connected to dispersed power source 23 and inverter 21.

Inverter 21 is a power conversion device that converts DC power from energy storage 22, into AC power. Inverter 21 is connected to power distribution system 40 that transmits AC power. Inverter 21 can supply power to consumer load 30 via power distribution system 40. Inverter 21 also has a function of compensating for negative-phase-sequence current of synchronous generator 11 as unbalanced current, under control of control device 100. The unbalanced current can occur in power distribution system 40, due to the influence of consumer load 30 or the like.

Control device 100 is a device that is composed of, for example, electronic circuitry including an integrated circuit of a microprocessor, memory, and the like, and controls inverter 21 by performing a predetermined control method. For example, control device 100 may be a device integrated with inverter 21. Control device 100 determines a control (gate command) parameter (gate command value) for inverter 21, and controls inverter 21. At each instant, control device 100 determines the gate command value, based on a result of detecting (measuring) voltage and current output from synchronous generator 11 to power distribution system 40, and information (own terminal information) of voltage and current output from inverter 21 to power distribution system 40, which is obtained by measurement and the like. Control device 100 includes inverter output component calculator 110, active and reactive power calculator 120, target output voltage generator 130, target output phase generator 140, power generation device output component calculator 150, negative-phase-sequence compensation voltage generator 160, and gate command value calculator 190 as functional structural elements, as illustrated in FIG. 1.

Inverter output component calculator 110 has a function of calculating and outputting voltage positive-phase-sequence component V⁺out_dg(dq), current positive-phase-senquence component I⁺out_dg(dq), voltage value Vout_dg, and voltage angular velocity ωg_dg, based on input own terminal information. The input own terminal information includes voltage Vout_dg(abc) and current Iout_dg(abc) output from inverter 21 to power distribution system 40. Voltage Vout_dg(abc) represents voltages Vout_dg_a, Vout_dg_b, and Vout_dg_c for respective axis components of an abc coordinate system, i.e. three phases. Current Iout_dg(abc) represents currents Iout_dg_a, Iout_dg_b, and Iout_dg_c for three phases. Voltage positive-phase-sequence component V⁺out_dg(dq) represents voltage positive-phase-sequence component V⁺out_dg_d as a d-axis component and voltage positive-phase-sequence component V⁺out_dg_q as a q-axis component in a dq coordinate system having orthogonal d axis and q axis. Current positive-phase-sequence component I⁺out_dg(dq) represents current positive-phase-sequence component I⁺out_dg_d as a d-axis component and current positive-phase-senquence component I⁺out_dg_q as a q-axis component in the dq coordinate system having orthogonal d axis and q axis.

Active and reactive power calculator 120 has a function of calculating and outputting active power Pout_dg and reactive power Qout_dg, based on voltage positive-phase-sequence component V⁺out_dg(dq) and current positive-phase-sequence component I⁺out_dg(dq) received from inverter output component calculator 110.

Target output voltage generator 130 has a function of generating and outputting target output voltage E_dg, based on voltage value Vout_dg received from inverter output component calculator 110 and reactive power Qout_dg received from active and reactive power calculator 120. Target output voltage E_dg is the amplitude of a vector in a complex plane combining voltages of three phases.

Target output phase generator 140 has a function of generating and outputting target output phase θm_dg, based on voltage angular velocity ωg_dg received from inverter output component calculator 110 and active power Pout_dg received from active and reactive power calculator 120. Target output phase θm_dg is the phase of the vector in the complex plane combining voltages of three phases.

Power generation device output component calculator 150 has a function of calculating and outputting current negative-phase-sequence component I⁻out_sg(dq) and voltage phase θg_sg, based on voltage Vout_sg(abc) and current Iout_sg(abc) output from synchronous generator 11 to power distribution system 40. Voltage Vout_sg(abc) represents voltages Vout_sg_a, Vout_sg_b, and Vout_sg_c for respective axis components of the abc coordinate system, i.e. three phases. Current Iout_sg(abc) represents currents Iout_sg_a, Iout_sg_b, and Iout_sg_c for three phases. Current negative-phase-sequence component I⁻out_sg(dq) represents current negative-phase-sequence component Iout_sg_d as a d-axis component and current negative-phase-sequence component I⁺out_sg_q as a q-axis component in the dq coordinate system having orthogonal d axis and q axis.

Negative-phase-sequence compensation voltage generator 160 has a function of generating and outputting first compensation voltage ΔV(αβ), based on current negative-phase-sequence component I⁻out_sg(dq) and voltage phase θg_sg received from power generation device output component calculator 150.

Gate command value calculator 190 has a function of determining a gate command value by a value obtained by coordinate-converting (γδ conversion) target output voltage E_dg output from target output voltage generator 130, target output phase θm_dg output from target output phase generator 140, and first compensation voltage ΔV(αβ) output from negative-phase-sequence compensation voltage generator 160. Gate command value calculator 190 issues a gate command based on the determined gate command value, thus controlling inverter 21.

### (Structure of inverter output component calculator 110)

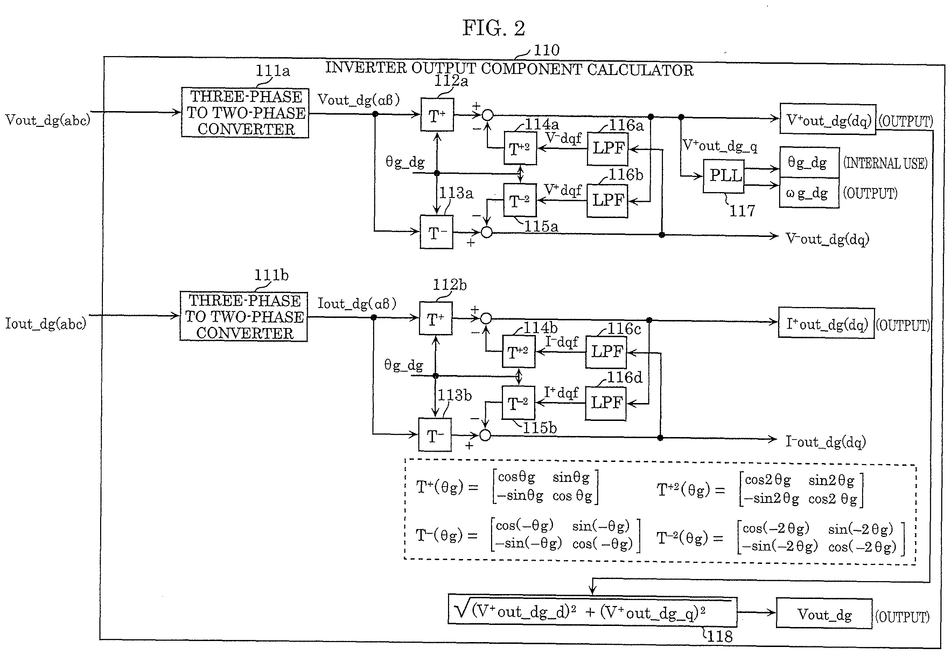

The structure of inverter output component calculator 110 is described below, with reference to FIG. 2.

FIG. 2 illustrates an example of the structure of inverter output component calculator 110. Inverter output component calculator 110 includes three-phase to two-phase converters 111a and 111b, converters (T⁺) 112a and 112b, converters (T⁻) 113a and 113b, converters (T⁺²) 114a and 114b, converters (T⁻²) 115a and 115b, low-pass filters (LPF) 116a to 116d, phase synchronization circuit (PLL) 117, and calculator 118, as illustrated in the drawing.

Three-phase to two-phase converter 111a converts symmetrical three-phase AC voltage Vout_dg(abc) represented in the abc coordinate system into two-phase AC voltage Vout_dg(αβ) represented in the αβ coordinate system, i.e. two-phase coordinate (α, β), and outputs voltage Vout_dg(αβ). Voltage Vout_dg(αβ) represents voltage Vout_dg_α as an α-axis component and voltage Vout_dg_β as a β-axis component.

Converter (T⁺) 112a, converter (T⁻) 113a, converter (T⁺²) 114a, converter (T⁻²) 115a, LPFs 116a and 116b, and, PLL 117 for dq conversion and the like calculate voltage phase θg_dg according to voltage Vout_dg(αβ) output from three-phase to two-phase converter 111a, and calculate voltage positive-phase-senquence component V⁺out_dg(dq) and voltage angular velocity ωg_dg. Calculated voltage positive-phase-sequence component V⁺out_dg(dq) and voltage angular velocity ωg_dg are output from inverter output component calculator 110. Calculated voltage phase θg_dg is recursively used in converter (T⁺) 112a, converter (T⁻) 113a, converter (T⁺²) 114a, and converter (T⁻²) 115a.

Calculator 118 calculates the magnitude of voltage positive-phase-sequence component V⁺out_dg(dq), to calculate voltage value Vout_dg. Calculated voltage value Vout_dg is output from inverter output component calculator 110.

Three-phase to two-phase converter 111b converts symmetrical three-phase AC current Iout_dg(abc) represented in the abc coordinate system into two-phase AC current Iout_dg(αβ) represented in the αβ coordinate system, i.e. two-phase coordinate (α, β), and outputs current Iout_dg(αβ). Current Iout_dg(αβ) represents current Iout_dg_α as an α-axis component and current Iout_dg_β as a β-axis component.

Converter (T⁺) 112b, converter (T⁻) 113b, converter (T⁺²) 114b, converter (T⁻²) 115b, and LPFs 116c and 116d for dq conversion and the like calculate current positive-phase-sequence component I⁺out_dg(dq), according to current Iout_dg(αβ) output from three-phase to two-phase converter 111b and voltage phase θg_dg. Calculated current positive-phase-senquence component I⁺out_dg(dq) is output from inverter output component calculator 110.

### (Structure of power generation device output component calculator 150)

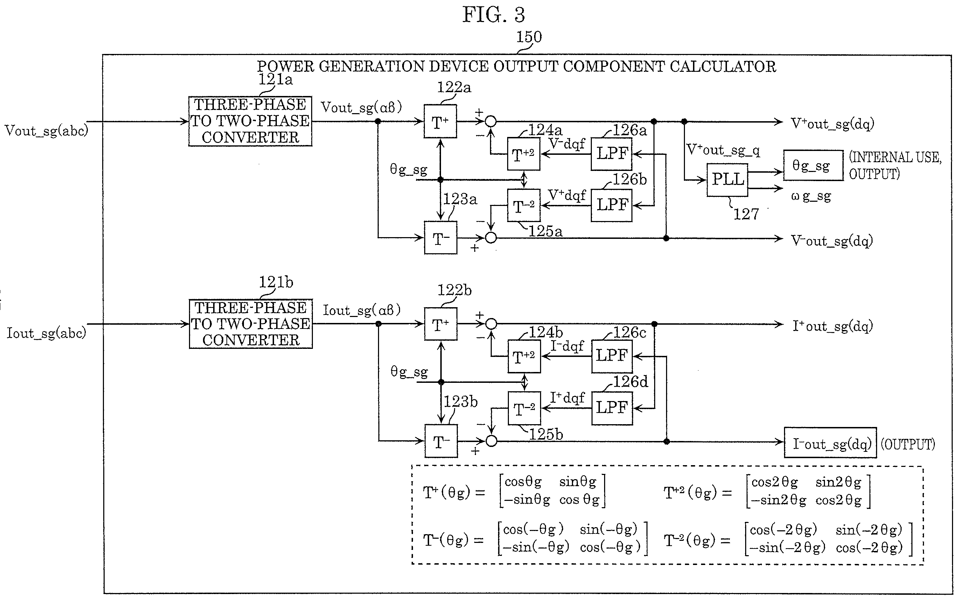

The structure of power generation device output component calculator 150 is described below, with reference to FIG. 3.

FIG. 3 illustrates an example of the structure of power generation device output component calculator 150. Power generation device output component calculator 150 includes three-phase to two-phase converters 121a and 121b, converters (T⁺) 122a and 122b, converters (T⁻) 123a and 123b, converters (T⁺²) 124a and 124b, converters (T⁻²) 125a and 125b, LPFs 126a to 126d, and PLL 127, as illustrated in the drawing.

Three-phase to two-phase converter 121a converts symmetrical three-phase AC voltage Vout_sg(abc) represented in the abc coordinate system into two-phase AC voltage Vout_sg(αβ) represented in the αβ coordinate system, and outputs voltage Vout_sg(αβ). Voltage Vout_sg(αβ) represents voltage Vout_sg_α as an α-axis component and voltage Vout_sg_β as a β-axis component.

Converter (T⁺) 122a, converter (T⁻) 123a, converter (T⁺²) 124a, converter (T⁻²) 125a, LPFs 126a and 126b, and PLL 127 for dq conversion and the like calculate voltage phase θg_sg according to voltage Vout_sg(αβ) output from three-phase to two-phase converter 121a, and calculate voltage positive-phase-sequence component V⁺out_sg(dq) and voltage angular velocity ωg_sg. Calculated voltage phase θg_sg is output from power generation device output component calculator 150. Calculated voltage phase θg_sg is further recursively used in converter (T⁺) 122a, converter (T⁻) 123a, converter (T⁺²) 124a, and converter (T⁻²) 125a.

Three-phase to two-phase converter 121b converts symmetrical three-phase AC current Iout_sg(abc) represented in the abc coordinate system into two-phase AC current Iout_sg(αβ) represented in the αβ coordinate system, and outputs current Iout_sg(αβ). Current Iout_sg(αβ) represents current Iout_sg_α as an α-axis component and current Iout_sg_β as a β-axis component.

Converter (T⁺) 122b, converter (T⁻) 123b, converter (T⁺²) 124b, converter (T⁻²) 125b, and LPFs 126c and 126d for dq conversion and the like calculate current negative-phase-sequence component I⁻out_sg(dq), according to current Iout_sg(αβ) output from three-phase to two-phase converter 121b and voltage phase θg_sg. Calculated current negative-phase-sequence component I⁻out_sg(dq) is output from power generation device output component calculator 150.

### (Structure of target output voltage generator 130)

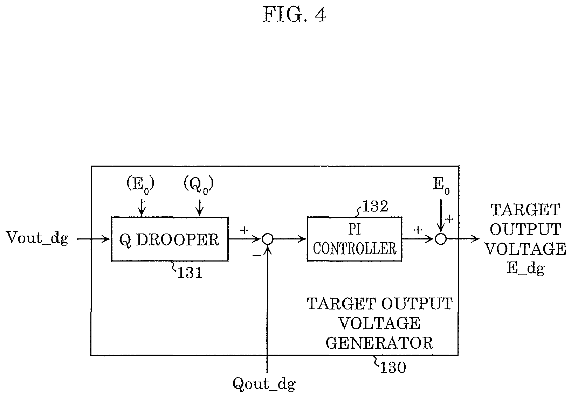

The structure of target output voltage generator 130 is described below, with reference to FIG. 4.

FIG. 4 illustrates an example of the structure of target output voltage generator 130. Target output voltage generator 130 includes Q drooper 131 and PI controller 132, as illustrated in the drawing.

Q drooper 131 has a function of performing droop control to provide droop property between a deviation between voltage value Vout_dg received from inverter output component calculator 110 and predetermined command output voltage value E0 and a deviation between predetermined command reactive power Q0 and target output reactive power, and calculating and outputting the target output reactive power. Predetermined command output voltage value E0 is set beforehand, and is, for example, 200 V. Predetermined command reactive power Q0 is set beforehand, and is, for example, 0 var. Predetermined command output voltage value E0 and predetermined command reactive power Q0 may be stored inside beforehand, or acquired from outside.

PI controller 132 has a function of calculating target output voltage E_dg. In detail, PI controller 132 has a function of performing PI control to eliminate a deviation between the target output reactive power output from Q drooper 131 and reactive power Qout_dg received from active and reactive power calculator 120 to thereby follow predetermined command output voltage value E0, thus causing output of target output voltage E_dg from target output voltage generator 130. Target output voltage E_dg is the amplitude of the vector in the complex plane combining voltages of three phases.

### (Structure of target output phase generator 140)

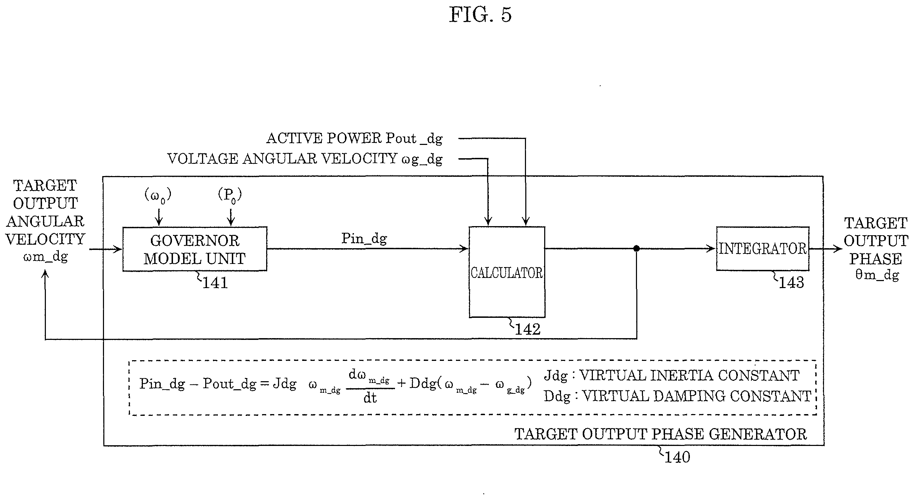

The structure of target output phase generator 140 is described below, with reference to FIG. 5.

FIG. 5 illustrates an example of the structure of target output phase generator 140. Target output phase generator 140 includes governor model unit 141, calculator 142, and integrator 143, as illustrated in the drawing.

Governor model unit 141 has a function of performing droop control (speed control) to provide droop property between a deviation between target output angular velocity ωm_dg, which is a time derivative of target output phase θm_dg, and predetermined command angular velocity ω0 and a deviation between predetermined command active power P0 and target output active power, and calculating and outputting target output active power Pin_dg. Predetermined command angular velocity ω0 is set beforehand, and is, for example, 314 rad/s or 376.8 rad/s. Predetermined command active power P0 is set beforehand, and is, for example, 1000 W. Predetermined command angular velocity ω0 and predetermined command active power P0 may be stored inside beforehand, or acquired from outside.

Calculator 142 has a function of calculating target output angular velocity ωm_dg, based on voltage angular velocity ωg_dg received from inverter output component calculator 110, active power Pout_dg received from active and reactive power calculator 120, and target output active power Pin_dg output from governor model unit 141. In FIG. 5, virtual inertia constant Jdg used for the calculation of target output angular velocity ωm_dg in calculator 142 represents the magnitude of rotational inertia with which a rotating object to be simulated by the inverter tries to maintain the same rotational motion, and virtual damping constant Ddg represents the magnitude of energy acting in a direction of attenuating the rotation.

Integrator 143 has a function of calculating and outputting target output phase θm_dg by time-integrating target output angular velocity ωm_dg calculated by calculator 142. Target output phase θm_dg is the phase of the vector in the complex plane combining voltages of three phases.

### (Structure of negative-phase-sequence compensation voltage generator 160)

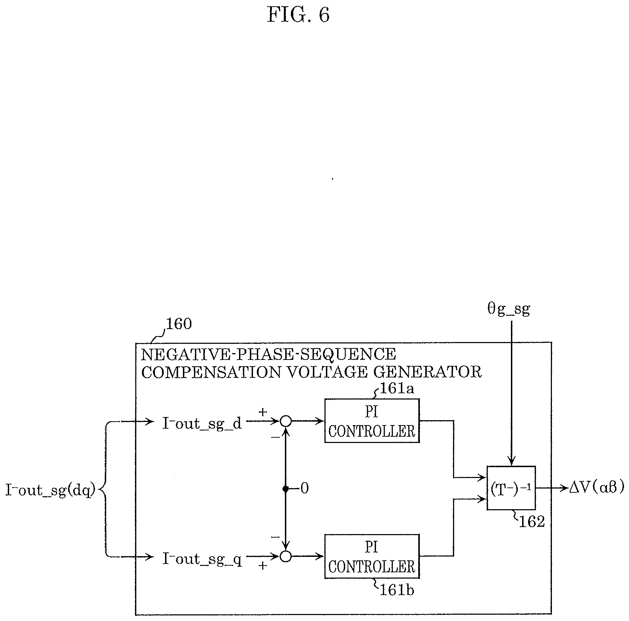

The structure of negative-phase-sequence compensation voltage generator 160 is described below, with reference to FIG. 6.

FIG. 6 illustrates an example of the structure of negative-phase-sequence compensation voltage generator 160. Negative-phase-sequence compensation voltage generator 160 includes PI controllers 161a and 161b and converter ((T⁻)⁻¹) 162, as illustrated in the drawing.

PI controllers 161a and 161b have a function of performing PI control for causing current negative-phase-sequence component I⁻out_sg(dq) received from power generation device output component calculator 150, i.e. current negative-phase-sequence component I⁻out_sg_d and current negative-phase-sequence component I⁻out_sg_q, to be zero (0). This PI control is control for compensating for negative-phase-sequence current of synchronous generator 11. Converter ((T⁻)⁻¹) 162 converts the input, by the inverse of matrix T⁻ (see FIG. 3) set according to voltage phase θg_sg received from power generation device output component calculator 150. Converter ((T⁻)⁻¹) 162 outputs first compensation voltage ΔV(αβ) for such compensation that causes current negative-phase-sequence component I⁻out_sg(dq) to be zero, based on the relationship with PI controllers 161a and 161b.

### (Effects)

In power supply system 1 described above, inverter 21 operates in response to the gate command (command based on the value obtained by coordinate-converting target output voltage E_dg, target output phase θm_dg, and first compensation voltage ΔV(αβ)) received from control device 100 with the foregoing structure. Inverter 21 can thus supply power to consumer load 30 and compensate for negative-phase-sequence current of synchronous generator 11.

Moreover, in power supply system 1, inverter 21 linked with dispersed power source 23 as an example operates as a voltage source as with synchronous generator 11, so that individual operation is possible.

### EMBODIMENT 2

Power supply system 1a which is a modification to part of power supply system 1 so as to perform control for inserting virtual impedance into inverter 21 is described below.

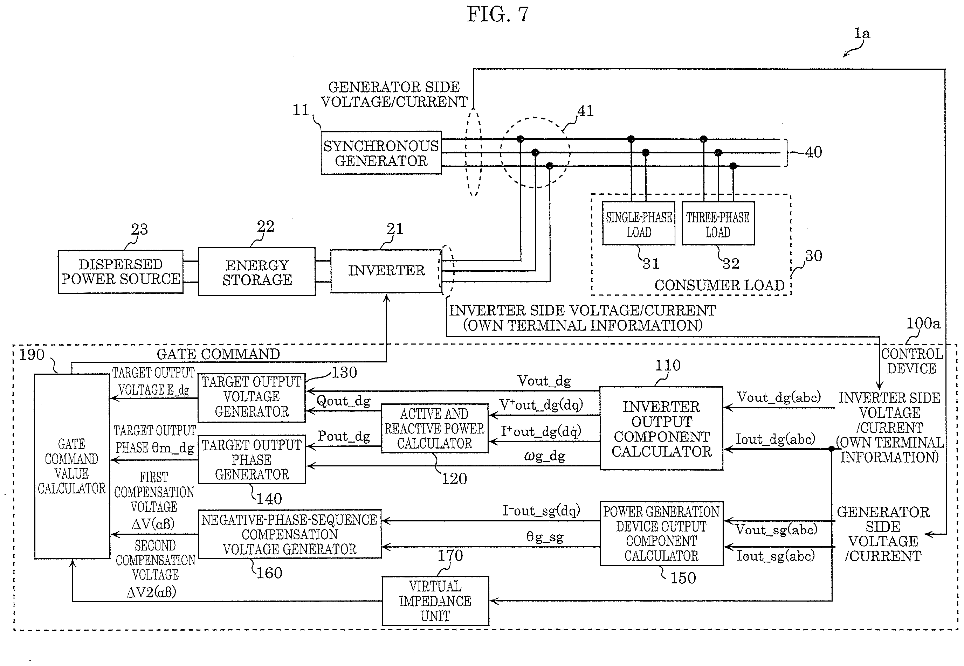

FIG. 7 is a diagram illustrating the schematic structure of power supply system 1a according to this embodiment. Power supply system 1a includes synchronous generator 11, inverter 21, energy storage 22, dispersed power source 23, control device 100a, and power distribution system 40, as illustrated in FIG. 7. Of the structural elements in power supply system 1a illustrated in FIG. 7, structural elements having the same functions as those of power supply system 1 described above are given the same reference marks as in FIG. 1, and their description is omitted. Control device 100a includes virtual impedance unit 170 in addition to the structure of control device 100 in Embodiment 1. Features of control device 100a not particularly described here are the same as those of control device 100.

Virtual impedance unit 170 has a function of calculating, based on own terminal information (current Iout_dg(abc) output from inverter 21), virtual impedance inserted into inverter 21, and outputting second compensation voltage ΔV2(αβ) according to the virtual impedance.

In such power supply system 1a, inverter 21 operates in response to the gate command (command based on the value obtained by coordinate-converting target output voltage E_dg, target output phase θm_dg, and first compensation voltage ΔV(αβ) and the value obtained by coordinate-converting second compensation voltage ΔV2(αβ)) received from control device 100a with the foregoing structure. Thus, inverter 21 can supply power to consumer load 30 and compensate for negative-phase-sequence current of synchronous generator 11, and also unwanted output power vibration from the inverter can be suppressed.

### (Other embodiments, etc.)

While power supply systems 1 and 1a according to Embodiments 1 and 2 have been described above, the foregoing embodiments are merely examples, and various changes, additions, omissions, and the like are possible.

The functional structural elements (functional structural elements for performing a control method for controlling inverter 21) in each of control devices 100 and 100a in the foregoing embodiments may be realized by hardware (such as electronic circuitry) without using software, or realized by software. A process by software is realized by a microprocessor in each of control devices 100 and 100a executing a control program stored in memory. The control program may be recorded in a recording medium and distributed or circulated. For example, by installing the distributed control program in a device such as a computer and causing a microprocessor in the device to execute the program, the functions of each of control devices 100 and 100a can be realized.

Any embodiment obtained by combining the structural elements and functions in the foregoing embodiments and the like is also included in the scope of the present invention.

The following describes the structures, variations, advantageous effects, etc. of a power supply system according to an aspect of the present invention and a control method used in the power supply system.

(1) A power supply system according to an aspect of the present invention includes: three-phase power distribution system 40 that is connected to consumer load 30; a power generation device (synchronous generator 11) that is connected to power distribution system 40; inverter 21 that is connected to power distribution system 40, supplies power to consumer load 30, and compensates for unbalanced current of the power generation device; inverter output component calculator 110 that calculates voltage positive-phase-senquence component V⁺out_dg(dq), current positive-phase-sequence component I⁺out_dg(dq), voltage angular velocity ωg_dg, and voltage value Vout_dg relating to inverter 21, based on three-phase voltage Vout_dg(abc) and current Iout_dg(abc) output from inverter 21 to power distribution system 40; power generation device output component calculator 150 that calculates current negative-phase-sequence component I⁻out_sg(dq) and voltage phase θg_sg relating to the power generation device, based on three-phase voltage Vout_sg(abc) and current Iout_sg(abc) output from the power generation device to power distribution system 40; active and reactive power calculator 120 that calculates active power Pout_dg and reactive power Qout_dg relating to inverter 21, from voltage positive-phase-sequence component V⁺out_dg(dq) and current positive-phase-sequence component I⁺out_dg(dq) relating to inverter 21; target output voltage generator 130 that generates target output voltage E_dg which is an amplitude of a vector in a complex plane combining voltages of three phases, based on voltage value Vout_dg and reactive power Qout_dg relating to inverter 21; target output phase generator 140 that generates target output phase θm_dg which is a phase of the vector in the complex plane combining the voltages of the three phases, based on voltage angular velocity ωg_dg and active power Pout_dg relating to inverter 21; negative-phase-sequence compensation voltage generator 160 that generates first compensation voltage ΔV(αβ), based on current negative-phase-sequence component I⁻out_sg(dq) and voltage phase θg_sg relating to the power generation device; and gate command value calculator 190 that generates a gate command to inverter 21, according to first compensation voltage ΔV(αβ), target output voltage E_dg, and target output phase θm_dg.

With this structure, inverter 21 operates in response to the gate command, and can thus supply power to consumer load 30 and compensate for negative-phase-sequence current of the power generation device (synchronous generator 11). This prevents damage to the power generation device.

(2) For example, inverter output component calculator 110 may: convert three-phase voltage Vout_dg(abc) and current Iout_dg(abc) output from inverter 21 to power distribution system 40 into two-phase voltage and current represented by two-phase coordinate (α, β) in an αβ coordinate system, by three-phase to two-phase conversion; calculate voltage positive-phase-sequence component V⁺out_dg(dq) and current positive-phase-sequence component I⁺out_dg(dq) relating to inverter 21, based on the two-phase voltage and current obtained by the conversion; and calculate voltage value Vout_dg from voltage positive-phase-sequence component V⁺out_dg(dq).

With this structure, the voltage positive-phase-sequence component, current positive-phase-sequence component, and voltage value of inverter 21 usable for the generation of the gate command are calculated in correspondence with the three-phase voltage and current output from inverter 21 to power distribution system 40.

(3) For example, power generation device output component calculator 150 may: convert three-phase voltage Vout_sg(abc) and current Iout_sg(abc) output from the power generation device to power distribution system 40 into two-phase voltage and current represented by two-phase coordinate (α, β) in an αβ coordinate system, by three-phase to two-phase conversion; and calculate current negative-phase-sequence component I⁻out_sg(dq) and voltage phase θg_sg relating to the power generation device, based on the two-phase voltage and current obtained by the conversion.

With this structure, the current negative-phase-sequence component and voltage phase of the power generation device usable for the generation of the gate command are calculated in correspondence with the three-phase voltage and current output from the power generation device to power distribution system 40.

(4) For example, target output voltage generator 130 may include: Q drooper 131 that calculates target output reactive power to provide a droop property between a deviation between voltage value Vout_dg relating to inverter 21 and predetermined command output voltage value E0 and a deviation between predetermined command reactive power Q0 and the target output reactive power; and a PI controller that calculates target output voltage E_dg to eliminate a deviation between the target output reactive power and reactive power Qout_dg relating to inverter 21.

With this structure, inverter 21 controlled by the gate command produces appropriate output depending on, for example, the state of consumer load 30 which may vary.

(5) For example, target output phase generator 140 may include: governor model unit 141 that calculates target output active power Pin_dg to provide a droop property between a deviation between target output angular velocity ωm_dg and predetermined command angular velocity ω0 and a deviation between predetermined command active power P0 and target output active power Pin_dg, target output angular velocity ωm_dg being a time derivative of target output phase θm_dg; calculator 142 that calculates target output angular velocity ωm_dg, based on target output active power Pin_dg, and active power Pout_dg and voltage angular velocity ωg_dg relating to inverter 21; and integrator 143 that integrates calculated target output angular velocity ωm_dg, to calculate target output phase θm_dg.

With this structure, inverter 21 controlled by the gate command produces appropriate output depending on, for example, the state of consumer load 30 which may vary.

(6) For example, negative-phase-sequence compensation voltage generator 160 may include PI controllers 161a and 161b that perform control to cause current negative-phase-sequence component I⁻out_sg(dq) relating to the power generation device to be zero (0).

With this structure, inverter 21 controlled by the gate command can compensate for negative-phase-sequence current of the power generation device (synchronous generator 11).

(7) For example, power supply system 1 or 1a may further include: virtual impedance unit 170 that generates second compensation voltage ΔV2(αβ), based on three-phase current Iout_dg(abc) output from inverter 21 to power distribution system 40, wherein gate command value calculator 190 also generates the gate command to inverter 21, according to second compensation voltage ΔV2(αβ).

With this structure, unwanted output power vibration from the inverter can be suppressed.

(8) A control method according to an aspect of the present invention is a control method in power supply system 1 or 1a that includes: three-phase power distribution system 40 that is connected to consumer load 30; a power generation device (synchronous generator 11) that is connected to power distribution system 40; and inverter 21 that is connected to power distribution system 40, supplies power to consumer load 30, and compensates for unbalanced current of the power generation device, the control method including: calculating voltage positive-phase-sequence component V⁺out_dg(dq), current positive-phase-sequence component I⁺out_dg(dq), voltage angular velocity ωg_dg, and voltage value Vout_dg relating to inverter 21, based on three-phase voltage Vout_dg(abc) and current Iout_dg(abc) output from inverter 21 to power distribution system 40; calculating current negative-phase-sequence component I⁻out_sg(dq) and voltage phase θg_sg relating to the power generation device, based on three-phase voltage Vout_sg(abc) and current Iout_sg(abc) output from the power generation device to power distribution system 40; calculating active power Pout_dg and reactive power Qout_dg relating to inverter 21, from voltage positive-phase-sequence component V⁺out_dg(dq) and current positive-phase-sequence component I⁺out_dg(dq) relating to inverter 21; generating target output voltage E_dg which is an amplitude of a vector in a complex plane combining voltages of three phases, based on voltage value Vout_dg and reactive power Qout_dg relating to inverter 21; generating target output phase θm_dg which is a phase of the vector in the complex plane combining the voltages of the three phases, based on voltage angular velocity ωg_dg and active power Pout_dg relating to inverter 21; generating first compensation voltage ΔV(αβ), based on current negative-phase-sequence component I⁻out_sg(dq) and voltage phase θg_sg relating to the power generation device; generating a gate command to inverter 21, according to first compensation voltage ΔV(αβ), target output voltage E_dg, and target output phase θm_dg; and controlling inverter 21 by the gate command.

With this structure, inverter 21 can supply power to consumer load 30, and compensate for negative-phase-sequence current of the power generation device (synchronous generator 11). This prevents damage to the power generation device.

(9) For example, the control method may include: generating a second compensation voltage, based on the three-phase current output from the inverter to the power distribution system, wherein the gate command is also generated according to the second compensation voltage.

With this structure, unwanted output power vibration from the inverter can be suppressed.

### REFERENCE MARKS IN THE DRAWINGS

- 1, 1a: power supply system
- 11: synchronous generator (power generation device)
- 21: inverter
- 30: consumer load
- 40: power distribution system
- 110: inverter output component calculator
- 120: active and reactive power calculator
- 130: target output voltage generator
- 131: Q drooper
- 132, 161a, 161b: PI controller
- 140: target output phase generator
- 141: governor model unit
- 142: calculator
- 143: integrator
- 150: power generation device output component calculator
- 160: negative-phase-sequence compensation voltage generator
- 170: virtual impedance unit
- 190: gate command value calculator

## Claims

1. A power supply system comprising:
a power distribution system that is connected to a consumer load, the power distribution system being a three-phase power distribution system;
a power generation device that is connected to the power distribution system;
an inverter that is connected to the power distribution system, supplies power to the consumer load, and compensates for an unbalanced current of the power generation device;
an inverter output component calculator that calculates a voltage positive-phase-sequence component, a current positive-phase-sequence component, a voltage angular velocity, and a voltage value relating to the inverter, based on a three-phase voltage and a three-phase current output from the inverter to the power distribution system;
a power generation device output component calculator that calculates a current negative-phase-sequence component and a voltage phase relating to the power generation device, based on a three-phase voltage and a three-phase current output from the power generation device to the power distribution system;
an active and reactive power calculator that calculates an active power and a reactive power relating to the inverter, from the voltage positive-phase-sequence component and the current positive-phase-sequence component relating to the inverter;
a target output voltage generator that generates a target output voltage which is an amplitude of a vector in a complex plane combining voltages of three phases, based on the voltage value and the reactive power relating to the inverter;
a target output phase generator that generates a target output phase which is a phase of the vector in the complex plane combining the voltages of the three phases, based on the voltage angular velocity and the active power relating to the inverter;
a negative-phase-sequence compensation voltage generator that generates a first compensation voltage, based on the current negative-phase-sequence component and the voltage phase relating to the power generation device; and
a gate command value calculator that generates a gate command to the inverter, according to the first compensation voltage, the target output voltage, and the target output phase.

2. The power supply system according to claim 1,
wherein the inverter output component calculator:
converts the three-phase voltage and the three-phase current output from the inverter to the power distribution system into a two-phase voltage and a two-phase current represented by a two-phase coordinate (α, β) in an αβ coordinate system, by three-phase to two-phase conversion;
calculates the voltage positive-phase-sequence component and the current positive-phase-senquence component relating to the inverter, based on the two-phase voltage and the two-phase current obtained by the conversion; and
calculates the voltage value from the voltage positive-phase-sequence component.

3. The power supply system according to claim 1 or claim 2,
wherein the power generation device output component calculator:
converts the three-phase voltage and the three-phase current output from the power generation device to the power distribution system into a two-phase voltage and a two-phase current represented by a two-phase coordinate (α, β) in an αβ coordinate system, by three-phase to two-phase conversion; and
calculates the current negative-phase-sequence component and the voltage phase relating to the power generation device, based on the two-phase voltage and the two-phase current obtained by the conversion.

4. The power supply system according to any one of claim 1 to claim 3,
wherein the target output voltage generator includes:
a Q drooper that calculates a target output reactive power to provide a droop property between a deviation between the voltage value relating to the inverter and a predetermined command output voltage value and a deviation between a predetermined command reactive power and the target output reactive power; and
a PI controller that calculates the target output voltage to eliminate a deviation between the target output reactive power and the reactive power relating to the inverter.

5. The power supply system according to any one of claim 1 to claim 4,
wherein the target output phase generator includes:
a governor model unit that calculates a target output active power to provide a droop property between a deviation between a target output angular velocity and a predetermined command angular velocity and a deviation between a predetermined command active power and the target output active power, the target output angular velocity being a time derivative of the target output phase;
a calculator that calculates the target output angular velocity, based on the target output active power, and the active power and the voltage angular velocity relating to the inverter; and
an integrator that integrates the target output angular velocity calculated, to calculate the target output phase.

6. The power supply system according to any one of claim 1 to claim 5,
wherein the negative-phase-sequence compensation voltage generator includes:
a PI controller that performs control to cause the current negative-phase-sequence component relating to the power generation device to be zero.

7. The power supply system according to any one of claim 1 to claim 6, further comprising:
a virtual impedance unit that generates a second compensation voltage, based on the three-phase current output from the inverter to the power distribution system,
wherein the gate command value calculator also generates the gate command according to the second compensation voltage.

8. A control method in a power supply system that includes: a power distribution system that is connected to a consumer load, the power distribution system being a three-phase power distribution system; a power generation device that is connected to the power distribution system; and an inverter that is connected to the power distribution system, supplies power to the consumer load, and compensates for an unbalanced current of the power generation device, the control method comprising:
calculating a voltage positive-phase-sequence component, a current positive-phase-sequence component, a voltage angular velocity, and a voltage value relating to the inverter, based on a three-phase voltage and a three-phase current output from the inverter to the power distribution system;
calculating a current negative-phase-sequence component and a voltage phase relating to the power generation device, based on a three-phase voltage and a three-phase current output from the power generation device to the power distribution system;
calculating an active power and a reactive power relating to the inverter, from the voltage positive-phase-sequence component and the current positive-phase-sequence component relating to the inverter;
generating a target output voltage which is an amplitude of a vector in a complex plane combining voltages of three phases, based on the voltage value and the reactive power relating to the inverter;
generating a target output phase which is a phase of the vector in the complex plane combining the voltages of the three phases, based on the voltage angular velocity and the active power relating to the inverter;
generating a first compensation voltage, based on the current negative-phase-sequence component and the voltage phase relating to the power generation device;
generating a gate command to the inverter, according to the first compensation voltage, the target output voltage, and the target output phase; and
controlling the inverter by the gate command.

9. The control method according to claim 8, comprising:
generating a second compensation voltage, based on the three-phase current output from the inverter to the power distribution system,
wherein the gate command is also generated according to the second compensation voltage.
